# EUROPEAN PATENT SPECIFICATION

(11) **EP 2 363 018 B1**
(45) Date of publication and mention of the grant of the patent: **08.10.2014**
(21) Application number: 11156225.2
(22) Date of filing: 28.02.2011
(51) Int. Cl.: A01G 9/12

(54) **Device for supporting plant parts**
Vorrichtung zum Stützen von Pflanzenteilen
Dispositif de support de constituants de plantes

(30) Priority: 02.03.2010 SE 1050195
(43) Date of publication of application: 07.09.2011
(73) Proprietor: Bush-up AB, 161 11 Bromma (SE)
(72) Inventor: Lövgren, Sten, 179 75 SKÅ (SE)
(74) Representative: Löfgren, Jonas

(56) References cited:
- DE-U1- 8 625 101
- DE-U1-202009 007 055
- FR-A1- 2 500 999
- US-A- 4 914 857

## Description

### FIELD OF THE INVENTION AND PRIOR ART

The present invention relates to a device for supporting plant parts, such as for instance branches of a bush, the device comprising an elongated support member, which is intended to be arranged as a ring under plant parts in order to support these from below or around plant parts in order to support these laterally, and a support appliance for supporting the support member.

It is usual for certain types of bushes, for instance berry bushes, that the branches of the bush is hanging down against the ground, which i.a. makes it difficult to clear away weeds and other things from the area under the branches. There is therefor a demand for a support device which can support the branches of such bushes and keep these branches at a suitable distance from the ground.

Devices for supporting plants are previously known in several different designs. Examples of such devices are for instance disclosed in US 7 219 467 A, US 5 179 799 A, US 4 914 857 A and US 2 851 823 A.

### OBJECT OF THE INVENTION

The object of the present invention is to provide a device of the type mentioned by way of introduction, with a new and favourable design.

### SUMMARY OF THE INVENTION

According to the present invention, said object is achieved by means of a device having the features defined in claim 1.

The device according to the invention comprises an elongated support member, which is intended to be arranged as a ring under or around the plant parts to be supported, and a support appliance for supporting the support member. According to the invention, the support appliance comprises:
- four or more support rods, the respective support rod being insertable into the ground at one of its ends in order to anchor the support appliance to the ground and having, at its other end, an attachment adapted to receive the support member;
- two or more elongated holding member, preferably in the form of elongated plates of metal or plastic material, which are intended to be arranged essentially horizontally between a respective pair of support rods in order to keep these support rods together in the horizontal direction, the respective holding member being provided with:
   - at one of its ends, a first hole adapted to receive a first support rod,
   - at its other end, a second hole adapted to receive a second support rod, and
   - a coupling section located between said ends, through which coupling section the holding member is connectable to the other holding members; and
- coupling means for connecting the holding members to each other with the holding members crossing each other and with the coupling sections of the holding members mutually superposed.

The support rods are consequently kept together in the erected state by the holding members, which in their turn are kept connected to each other by means of the coupling means. The holding members centre the support rods and give the support appliance an optimal force distribution. The holding members are displaceable along the support rods and can be arranged at a distance from the ground that is suitable with respect to the plant parts to be supported. Owing to the design and the function of the holding members, the support rods can be thrust into the ground close to the roots of the plant to be supported, and the device is through its construction able to support plant parts of a plant, such as for instance branches of a bush, in an efficient manner at the same time as it gives a discrete impression. Furthermore, the device consists of simple components which can be manufactured in a simple manner and at low cost.

According to an embodiment of the invention, the coupling means comprise a coupling pin, the coupling section of the respective holding member being provided with a coupling hole adapted to receive said coupling pin. The holding members can hereby be connected to each other in a simple and efficient manner.

According to another embodiment of the invention, the coupling pin has a hexagonal cross-sectional shape, the coupling hole of the respective holding member having a corresponding hexagonal cross-sectional shape. The coupling pin can hereby achieve a connection of three holding members to each other with a given angle of 60° between each holding member, whereby an even distribution of the holding members around the coupling pin is guaranteed.

According to another embodiment of the invention, the coupling pin has a round cross-sectional shape, the coupling hole of the respective holding member having a corresponding round cross-sectional shape. With this variant, the coupling pin can be used in order to connect an arbitrary number of holding members to each other with desired angles between the holding members, whereby the number of holding members in each individual case can be adapted in dependence of the number of support rods required in order to support the plant parts in question.

Other favourable features of the device according to the invention will appear from the dependent claims and the description following below.

### BRIEF DESCRIPTION OF THE DRAWINGS

The invention will in the following be more closely described by means of embodiment examples, with reference to the appended drawings. It is shown in:
- Fig 1: a perspective view of a device according to an embodiment of the present invention,
- Fig 2: a plant provided with a device according to Fig 1,
- Fig 3: a perspective view of a support rod included in the device of Fig 1, with the support rod shown in a non-bended state,
- Fig 4: a perspective view of holding members and coupling means included in the device of Fig 1, with these shown separated from each other,
- Fig 5: the holding members and the coupling means of Fig 4 with these shown connected to each other, and
- Fig 6: a perspective view of holding members and coupling means included in a device according to an alternative embodiment of the invention, with these shown separated from each other.

### DETAILED DESCRIPTION OF PREFERRED EMBODIMENTS

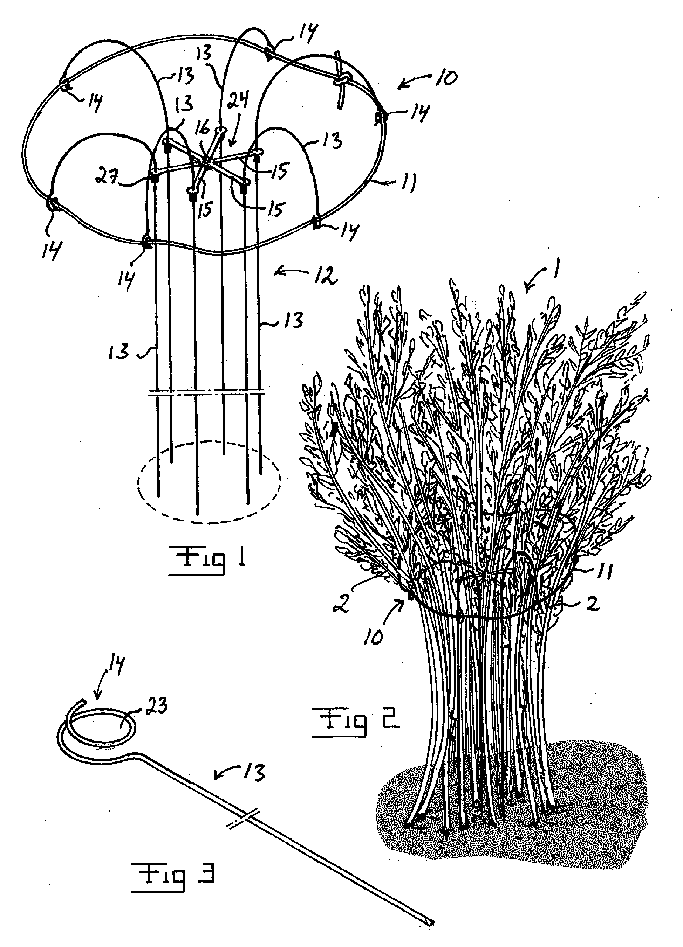

A device 10 according to the present invention is shown in Figs 1 and 2. In Fig 2 the device is shown mounted at a plant 1 in order to support plant parts 2 in the form of stems of the plant. The device may with advantage also be used to support, from below, branches of a bush which are hanging down, so that these branches are kept at a suitable distance from the ground.

The device 10 comprises an elongated support member 11 intended to be arranged as a ring under or around the plant parts 2 to be supported. The plant parts 2 are intended to rest against this support member 11, whereby the support member 11 consequently supports these plant parts from below or laterally. In the example illustrated in Fig 1, the support member 11 is made of a string with mutually joined ends. The support member could also be made of a bendable metal wire or other suitable wire or band.

The device 10 further comprises a support appliance 12 for supporting the support member 11. This support appliance 12 comprises:
- four or more support rods 13, the respective support rod 13 being insertable into the ground at one of its ends in order to anchor the support appliance to the ground, and having, at its other end, an attachment 14 adapted to receive the support member 11;
- two or more elongated holding member 15, which are intended to be arranged essentially horizontally between a respective pair of support rods 13 in order to keep these support rods together in the horizontal direction; and
- coupling means 16 for connecting the holding members 15 to each other.

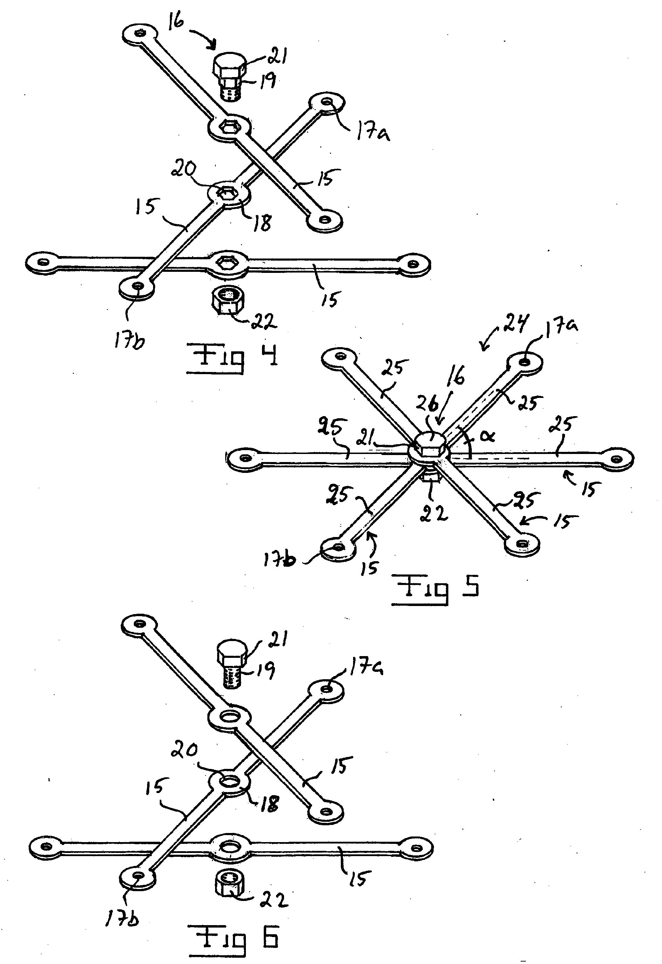

The respective holding member 15 suitably has the form of an elongated plate and is provided with:
- at one of its ends, a first through hole 17a (see Figs 4-6) adapted to receive a first support rod;
- at its other end, a second through hole 17b adapted to receive a second support rod; and
- a coupling section 18 located between said ends, through which coupling section the holding member 15 is connectable to the other holding members.

The holding members 15 are suitably made of metal sheet or plastic material.

The holding members 15 are intended to be applied on each other with mutually superposed coupling sections 18 and in mutually different angular position so as to thereby cross each other.

Said coupling means 16 with advantage comprise a coupling pin 19, which can be brought into engagement with the coupling sections 18 of the holding members. In this case, the coupling section 18 of the respective holding member 15 is provided with a through coupling hole 20 adapted to receive said coupling pin 19. This coupling hole 20 is arranged in the centre of the holding member 15 and extends in parallel with the holes 17a, 17b at the ends of the holding member and perpendicularly to the longitudinal axis of the holding member.

In the embodiment illustrated in Figs 4 and 5, the coupling pin 19 has a hexagonal cross-sectional shape, the coupling holes 20 of the holding members having a corresponding hexagonal cross-sectional shape. In this case, the coupling pin 19 is adapted for connecting three holding members 15 to each other, the angle α between the longitudinal axes of two adjacent holding members being 60°.

In the embodiment illustrated in Fig 6, the coupling pin 19 has a round cross-sectional shape, the coupling holes 20 of the holding members having a corresponding round cross-sectional shape. In this case, the holding members 15 may be arranged in an arbitrary number and in arbitrary angular positions around the coupling pin 19.

In the illustrated embodiments, the coupling pin 19 is at one of its ends connected to a head 21 which is wider than the coupling holes 19 of the holding members, the coupling pin being threaded at its other end for engagement with a nut 22 included in the coupling means. Consequently, the internal thread of the nut 22 corresponds to the external thread of the coupling pin 19 so that the nut can be screwed onto the coupling pin to thereby clamp several mutually superposed holding members 15 between the head 21 and the nut 22. The holding members 15 could alternatively be designed to be secured to the coupling pin 19 by force fit between the coupling pin and the coupling holes 20 of the holding members.

The support rods 13 are suitably bendable so as to be bendable to a suitable shape during the mounting of the support appliance 12. In this case, the support rods 13 may be delivered in a straight shape, as illustrated in Fig 3, in order to be bent in a suitable manner later on when used. The support rods 13 are with advantage made of resilient metal wire, preferable of spring steel.

The attachment 14 of the respective support rod 13 suitably consists of an open loop 23 which is formed by a bending of the end section of the support rod, as illustrated in Fig 3. Owing to the fact that the loop 23 is open, the support member 11 can be moved laterally into the loop. In order to avoid a lateral deflection of the support rod under the effect of the force on the support member 11 from the plant parts resting against the support member 11, said loop 23 and the rest of the support rod 13 are suitably arranged to lie in essentially the same plane. The attachment 14 could alternatively consist of a closed ring or a hook.

When a device 10 of the type described above is to be mounted at a plant 1, such as for instance a bush, a suitable number of holding members 15 are connected to each other by means of the coupling pin 19 and the nut 22 so as to form a united holding unit 24 with holding arms 25, which are formed by the holding members 15 and which project in a radial direction from the centre 26 of the holding unit and are evenly or at least essentially evenly distributed about the centre 26 of the holding unit. Thereafter, a support rod 13 is thrust through the through hole 17a, 17b of each holding arm 25 and further down into the ground in order to form a support appliance 12, which is anchored to the ground through the support rods 13 and kept together in the horizontal direction by the holding unit 24. The support rods 13 are in a bent shape or are being bent so that their upper ends will project in essentially radial direction from the holding unit 24. Finally, the elongated support member 11 is inserted into the attachments 14 at the outer ends of the support rods 13 so as to form a ring outwardly of the holding unit 24 and under or around the plant parts 2 to be supported. Said plant parts are made to rest against the support member 11 so that they are supported by the support member and thereby are held up in a suitable position. The support member 11 is in its turn supported by the support appliance 12, which supports the support member 11 through the support rods 13 and keeps the support member in place.

In order to keep the holding members 15 in place on the support rods 13 in the vertical direction and prevent the holding members 15 from sliding down towards the ground along the support rods 13, a stop member 27 is with advantage secured to the respective support rod 13 below the associated holding member 15, as illustrated in Fig 1. This stop member 27 may for instance consist of a plastic clip or the similar that is clamped onto the support rod.

The invention is of course not in any way limited to the embodiments described above. On the contrary, several possibilities to modifications thereof should be apparent to a person skilled in the art without thereby deviating from the basic idea of the invention as defined in appended claims.

## Claims

1. A device for supporting plant parts, such as for instance branches of a bush, the device (10) comprising an elongated support member (11), which is intended to be arranged as a ring under plant parts in order to support these from below or around plant parts in order to support these laterally, and a support appliance (12) for supporting the support member (11),
***characterized* in that** the support appliance (12) comprises:
- four or more support rods (13), the respective support rod (13) being insertable into the ground at one of its ends in order to anchor the support appliance to the ground and having, at its other end, an attachment (14) adapted to receive the support member (11);
- two or more elongated holding member (15), preferably in the form of elongated plates of metal or plastic material, which are intended to be arranged essentially horizontally between a respective pair of support rods (13) in order to keep these support rods together in the horizontal direction, the respective holding member (15) being provided with:
• at one of its ends, a first hole (17a) adapted to receive a first support rod,
• at its other end, a second hole (17b) adapted to receive a second support rod, and
• a coupling section (18) located between said ends, through which coupling section the holding member (15) is connectable to the other holding members; and
- coupling means (16) for connecting the holding members (15) to each other with the holding members crossing each other and with the coupling sections (18) of the holding members mutually superposed.

2. A device according to claim 1, ***characterized* in that** the coupling means (16) comprise a coupling pin (19), and that the coupling section (18) of the respective holding member (15) is provided with at coupling hole (20) adapted to receive said coupling pin (19).

3. A device according to claim 2, ***characterized* in that** the coupling pin (19) has a hexagonal cross-sectional shape, and that said coupling hole (20) has a corresponding hexagonal cross-sectional shape.

4. A device according to claim 2, ***characterized* in that** the coupling pin (19) has a round cross-sectional shape, and that said coupling hole (20) has a corresponding round cross-sectional shape.

5. A device according to any of claims 2-4, ***characterized* in that** the coupling pin (19) at one of its ends is connected to a head (21), which is wider than said coupling hole (20).

6. A device according to claim 5, ***characterized* in that** the coupling pin (19) is threaded at its other end for engagement with a nut (22) included in the coupling means (16).

7. A device according to any of claims 1-6, ***characterized* in that** said attachment (14) of the respective support rod (13) consists of a loop (23) formed by a bending of the support rod.

8. A device according to claim 7, ***characterized* in that** said loop (23) and the rest of the support rod (13) lie in essentially the same plane.

9. A device according to any of claims 1-8, ***characterized* in that** the respective support rod (13) is made of resilient metal wire, preferably of spring steel.

10. A device according to any of claims 1-9, ***characterized* in that** the support member (11) is made of a string or of metal wire.

## Patentansprüche

1. Vorrichtung zum Stützen von Pflanzenteilen, wie beispielsweise Zweige eines Strauchs, wobei die Vorrichtung (10) ein längliches Stützelement (11), das dazu vorgesehen ist, als ein Ring unter Pflanzenteilen, um diese von unten zu stützen, oder um Pflanzenteile, um diese seitlich zu stützen, angeordnet zu werden,
und eine Unterstützungseinrichtung (12), um das Stützelement (11) zu unterstützen, aufweist,
**dadurch gekennzeichnet, dass**
die Unterstützungseinrichtung (12) aufweist:
- vier oder mehr Stützstangen (13), wobei die jeweilige Stützstange (13) an einem ihrer Enden in den Boden einführbar ist, um die Unterstützungseinrichtung im Boden zu verankern, und an ihrem anderen Ende eine Halterung (14) aufweist, das dazu ausgebildet ist, das Stützelement (11) aufzunehmen;
- zwei oder mehr längliche Halteglieder (15), bevorzugt in der Form länglicher Platten aus Metall oder Kunststoffmaterial, die dazu vorgesehen sind, im Wesentlichen horizontal zwischen einem entsprechenden Paar Stützstangen (13) angeordnet zu werden, um diese Stützstangen in der horizontalen Richtung zusammen zu halten, wobei das jeweilige Haltelement (15) ausgestattet ist mit:
• einer ersten Öffnung (17a) an einem seiner Enden, das dazu ausgebildet ist, eine erste Stützstange aufzunehmen,
• einer zweiten Öffnung (17b) an seinem anderen Ende, das dazu ausgebildet ist, eine zweite Stützstange aufzunehmen, und
• einem Kopplungsabschnitt (18), der zwischen diesen Enden liegt, wobei das Halteglied (15) durch den Kopplungsabschnitt mit den anderen Haltegliedern verbindbar ist; und
- Kopplungsmittel (16) zum Verbinden der Halteglieder (15) miteinander, wobei die Halteglieder einander kreuzen und die Kopplungsabschnitte (18) der Halteglieder übereinander liegen.

2. Vorrichtung nach Anspruch 1,
**dadurch gekennzeichnet, dass**
die Kopplungsmittel (16) einen Kopplungsbolzen (19) aufweisen, und dass der Kopplungsabschnitt (18) des jeweiligen Halteglieds (15) mit einer Kopplungsöffnung (20) versehen ist, die dazu ausgebildet ist, den Kopplungsbolzen (19) aufzunehmen.

3. Vorrichtung nach Anspruch 2,
**dadurch gekennzeichnet, dass**
der Kopplungsbolzen (19) eine hexagonale Querschnittsform hat, und dass die Kopplungsöffnung (20) eine entsprechende hexagonale Querschnittsform hat.

4. Vorrichtung nach Anspruch 2,
**dadurch gekennzeichnet, dass**
der Kopplungsbolzen (19) eine runde Querschnittsform hat, und dass die Kopplungsöffnung (20) eine entsprechende runde Querschnittsform hat.

5. Vorrichtung nach irgendeinem der Ansprüche 2-4,
**dadurch gekennzeichnet, dass** der Kopplungsbolzen (19) an einem seiner Enden mit einem Kopf (21) verbunden ist, der breiter als die Kopplungsöffnung (20) ist.

6. Vorrichtung nach Anspruch 5,
**dadurch gekennzeichnet, dass** der Kopplungsbolzen (19) an seinem anderen Ende mit einem Gewinde zum Eingriff mit einer Gegenmutter (22) versehen ist, die in den Kopplungsmitteln (16) eingefügt ist.

7. Vorrichtung nach irgendeinem der Ansprüche 1-6,
**dadurch gekennzeichnet, dass** die Halterung (14) der jeweiligen Stützstange (13) aus einer Windung (23) besteht, die durch eine Krümmung der Stützstange gebildet wird.

8. Vorrichtung nach Anspruch 7,
**dadurch gekennzeichnet, dass** die Windung (23) und der Rest der Stützstange (13) im Wesentlichen in derselben Ebene liegen.

9. Vorrichtung nach irgendeinem der Ansprüche 1-8,
**dadurch gekennzeichnet, dass** die jeweilige Stützstange (13) aus elastischem Metalldraht, bevorzugt aus Federstahl, gefertigt ist.

10. Vorrichtung nach irgendeinem der Ansprüche 1-9, **dadurch gekennzeichnet, dass** das Stützelement (11) aus einer Schnur oder aus Metalldraht gefertigt ist.

## Revendications

1. Dispositif pour supporter des parties de plantes, comme par exemple des branches de buisson, le dispositif (10) comprenant un élément de support allongé (11), qui est destiné à être agencé comme une bague sous des parties de plantes afin de les soutenir par le dessous ou autour des parties de plantes afin de les supporter latéralement, et un appareil de support (12) pour supporter l'élément de support (11)
**caractérisé en ce que** l'appareil de support (12) comprend :
- quatre tiges de support (13) ou plus, la tige de support respective (13) pouvant être insérée dans le sol à l'une de ses extrémités afin d'ancrer l'appareil de support au sol et ayant, à son autre extrémité, une fixation (14) adaptée pour recevoir l'élément de support (11) ;
- deux éléments de support allongés (15) ou plus, de préférence en forme de plaques allongées de métal ou de matière plastique, qui sont destinées à être agencées essentiellement horizontalement entre une paire respective de tiges de support (13) afin de maintenir ces tiges de support ensemble dans la direction horizontale, l'élément de support respectif (15) étant doté :
• à une de ses extrémités, d'un premier trou (17a) adapté pour recevoir une première tige de support,
• à son autre extrémité, d'un second trou (17b) adapté pour recevoir une seconde tige de support, et
• d'une section de couplage (18) située entre lesdites extrémités, section de couplage à travers laquelle l'élément de support (15) peut être raccordé à d'autres éléments de support, et
- un moyen de couplage (16) pour raccorder les éléments de support (15) les uns aux autres, avec les éléments de support se croisant les uns les autres et avec les sections de couplage (18) des éléments de support mutuellement superposés.

2. Dispositif selon la revendication 1, **caractérisé en ce que** le moyen de couplage (16) comprennent une broche de couplage (19) et **en ce que** la section de couplage (18) de l'élément de support respectif (15) est dotée d'un orifice de couplage (20) adapté pour recevoir ladite broche de couplage (19).

3. Dispositif selon la revendication 2, **caractérisé en ce que** la broche de couplage (19) a une forme en coupe transversale hexagonale, et **en ce que** ledit orifice de couplage (20) a une forme transversale hexagonale correspondante.

4. Dispositif selon la revendication 2, **caractérisé en ce que** la broche de couplage (19) a une forme en coupe transversale ronde et **en ce que** ledit orifice de couplage (20) a une forme en coupe transversale ronde correspondante.

5. Dispositif selon l'une quelconque des revendications 2 à 4, **caractérisé en ce que** la broche de couplage (19), à une de ses extrémités, est raccordée à une tête (21) qui est plus large que ledit orifice de couplage (20).

6. Dispositif selon la revendication 5, **caractérisé en ce que** la broche de couplage (19) est filetée à son autre extrémité pour une mise en prise avec un écrou (22) compris dans le moyen de couplage (16).

7. Dispositif selon l'une quelconque des revendications 1 à 6, **caractérisé en ce que** ladite fixation (14) de la tige de support respective (13) est constituée d'une boucle (23) formée par le pliage de la tige de support.

8. Dispositif selon la revendication 7, **caractérisé en ce que** ladite boucle (23) et le reste de la tige de support (13) se trouvent essentiellement sur le même plan.

9. Dispositif selon l'une quelconque des revendications 1 à 8, **caractérisé en ce que** la tige de support respective (13) est constituée d'un fil métallique résilient, de préférence en acier à ressorts.

10. Dispositif selon l'une quelconque des revendications 1 à 9, **caractérisé en ce que** l'élément de support (11) est constitué d'une ficelle ou d'un fil métallique.
